# EUROPÄISCHE PATENTANMELDUNG

(11) **EP 0 901 859 A1**
(43) Veröffentlichungstag der Anmeldung: **17.03.1999**
(21) Anmeldenummer: 98112374.8
(22) Anmeldetag: 04.07.1998
(51) Int. Cl.: B23B 31/26

(54) **Spannvorrichtung**

(30) Priorität: 12.09.1997 DE 19740046
(71) Anmelder: Röhm GmbH, 89567 Sontheim (DE)
(72) Erfinder: Hangleiter, Eugen, 89568 Hermaringen (DE)
(74) Vertreter: Dziewior, Joachim, Dipl.-Phys. Dr.

(57) **Zusammenfassung**

Die Spannvorrichtung für einen eine radiale Bohrung (6) aufweisenden Hohlschaft an einem Hohlschaftkegel (1) weist einen an einer Arbeitsspindel (4) angeschlossenen Spannkopf (2) auf. In einer in der Arbeitsspindel (4) ausgebildeten Aufnahme (7) ist ein verstellbarer Haltekörper (8) angeordnet, der unter der Wirkung einer Feder (10) über den Rand (11) der Aufnahme (7) hinaus gegen den der Arbeitsspindel (4) zugewandten Rand (12) der radialen Bohrung (6) des Hohlschafts preßbar ist.

## Beschreibung

Die Erfindung betrifft eine Spannvorrichtung für einen eine radiale Bohrung aufweisenden Hohlschaft an einem Hohlschaftkegel, Werkzeug, Werkstück oder dergleichen, mit einem an einer Arbeitsspindel angeschlossenen Spannkopf.

Aus der DE 43 30 679 A1 oder der DE 41 38 974 A1 ist eine derartige Spannvorrichtung bekannt, bei der die Spannklauen durch eine über eine Zugstange vermittelte axiale Verstellung des Spannkopfes aus einer Position, in der sie außer Eingriff mit dem Hohlschaftkegel sind, in eine Position verstellt werden, in der die Spannklauen in Eingriff mit dem Hohlschaftkegel sind, der üblicherweise mittels einer Ladeeinrichtung der Spannvorrichtung zugeführt wird. Die Verbindung zwischen Ladeeinrichtung und Hohlschaftkegel kann dabei erst gelöst werden, wenn dieser von den Spannklauen sicher gehalten wird.

Der Erfindung liegt die Aufgabe zugrunde, eine Spannvorrichtung der eingangs genannten Art so auszubilden, daß die Zeitdauer für den Wechsel eines Hohlschaftkegels, eines Werkzeuges, Werkstückes verkürzt werden kann.

Diese Aufgabe wird bei einer Spannvorrichtung der eingangs genannten Art dadurch gelöst, daß in einer in der Arbeitsspindel ausgebildeten Aufnahme ein verstellbarer Haltekörper angeordnet ist, der unter der Wirkung einer Feder über den Rand der Aufnahme hinaus gegen den der Arbeitsspindel zugewandten Rand der axialen Bohrung des Hohlschafts preßbar ist.

In der DIN 69893 ist geregelt, wie ein Hohlschaftkegel zu bemessen ist, wobei dort weiterhin normiert ist, wo und mit welcher Größe die Bohrungen anzuordnen sind, die bisher dazu vorgesehen sind, mit einem Werkzeug in den Hohlschaft eingreifen zu können. Die Erfindung macht sich nun die Präsenz der Bohrungen zunutze, indem sie in diese den Haltekörper eingreifen läßt, der unter der Wirkung der Feder einen in Axialrichtung der Arbeitsspindel erfolgenden Einzug des Hohlschaftes bewirkt, wobei die Größe des Einzugsweges von der Anordnung der Aufnahme in der Arbeitsspindel und der Größe des Haltekörpers abhängt. Über den Haltekörper wird somit eine vorläufige Lagesicherung des Hohlschaftes erreicht, aufgrund derer es möglich ist, die Ladeeinrichtung bereits von diesem zu lösen, so daß bei einem Wechsel des Hohlschaftes die Reaktionszeit der Spannvorrichtung mit dem Spannkopf und den Spannklauen nicht abgewartet werden muß, wodurch sich ein schnellerer Wechsel ergibt.

Hinsichtlich einer gleichmäßigen Kraftübertragung und der Vermeidung des Auftretens von Kippmomenten ist es bevorzugt, wenn gleichmäßig über den Umfang verteilt die axiale Bohrung und die Aufnahme mit Haltekörper und Feder zu mehreren vorgesehen sind.

In fertigungstechnischer Hinsicht ist es vorteilhaft, wenn die Aufnahme radial ausgerichtet und an der axialen Bohrung des Hohlschafts eine Anlaufschräge für den Haltekörper ausgebildet ist, wobei über die Anlaufschräge die in axialer Richtung erfolgende Verschiebung des Hohlschaftes aufgrund der radialen Verstellung des Haltekörpers vermittelt wird.

Es hat sich als günstig erwiesen, wenn auch am Haltekörper eine Anlaufschräge ausgebildet ist, wobei auf eine lagerichtige Orientierung des Haltekörpers dann nicht geachtet werden muß, wenn der Haltekörper durch eine Kugel gebildet ist.

Im Rahmen der Erfindung ist vorgesehen, daß der Durchmesser der Kugel kleiner als der Durchmesser der axialen Bohrung des Hohlschafts ist. Dadurch ist sichergestellt, daß die Kugel nur an dem der Arbeitsspindel zugewandten Rand der axialen Bohrung anliegt, so daß nicht eine simultane Beaufschlagung des axial dem Arbeitsspindel zugewandten und des der Arbeitsspindel abgewandten Randes der Bohrung erfolgt, die eine axiale Verschiebung des Hohlschaftes verhindert und lediglich eine in radialer Richtung entsprechend der Federwirkung erfolgende Krafteinleitung ergäbe.

Im Rahmen der Erfindung ist weiterhin vorgesehen, daß die Aufnahme sich zu ihrem Rand hin verjüngt. Damit ist erreicht, daß ein vollständiger Austritt der Kugel aus der Aufnahme verhindert ist.

Weiterhin ist vorgesehen, daß in der Aufnahme ein den Verstellweg des Haltekörpers begrenzender Anschlag angeordnet ist, der verhindert, daß bei einer impulsartig auf die Kugel einwirkenden Kraft diese zu weit in die Aufnahme zurückschnellt.

Zweckmäßigerweise ist die Feder durch eine auf den Anschlag gesteckte Spiralfeder gebildet, die zugleich mit ihrer obersten, der Kugel zugewandten Windung ein Lager für die Kugel bildet.

Eine Spannvorrichtung, die auch bei großen Wechselzahlen eine gleichbleibende genaue Spannung ermöglicht, ist dadurch gekennzeichnet, daß an dem an der Arbeitsspindel ausgebildeten, die Aufnahme aufweisenden Aufnahmekegel ein sich in axialer Richtung erstreckender, symmetrisch zum Haltekörper angeordneter Freiraum vorgesehen ist. An den Stellen des Hohlschaftkegels, an denen beim Einstecken in den Aufnahmekegel die Kugel abläuft, können Aufwerfungen auftreten, die die Spanngenauigkeit beeinträchtigen. Um dies zu verhindern, ist der Freiraum ausgebildet, in den die Aufwerfungen eintreten können.

Zweckmäßigerweise ist dabei der Freiraum als flache, die Lauffläche des Haltekörpres an dem Hohlschaftkegel einschließende Mulde ausgebildet. Der Freiraum kann in seinen Abmessungen also sehr klein gehalten werden, wodurch sich die Anlagefläche von Hohlschaftkegel und Aufnahmekegel nur unmerklich reduziert.

Die Kugel läuft zwar nur an dem vorderen, vor der Bohrung befindlichen Ende des Hohlschaftkegels ab. Im Rahmen der Erfindung ist aber vorgesehen, daß der Freiraum in axialer Richtung beidseits der Aufnahme ausgebildet ist. Dadurch ist verhindert, daß die Aufwerfungen beim Wechsel des Hohlschaftkegels an dem freien Ende des Aufnahmekegels entlang schaben.

Im folgenden soll die Erfindung an einem in der Zeichnung dargestellten Ausführungsbeispiel näher erläutert werden; es zeigen:
- Fig. 1: einen Schnitt durch das einen Hohlschaftkegel haltende axiale Ende einer Spannvorrichtung, und
- Fig. 2: eine vergrößerte Darstellung des Details II aus Fig. 1,

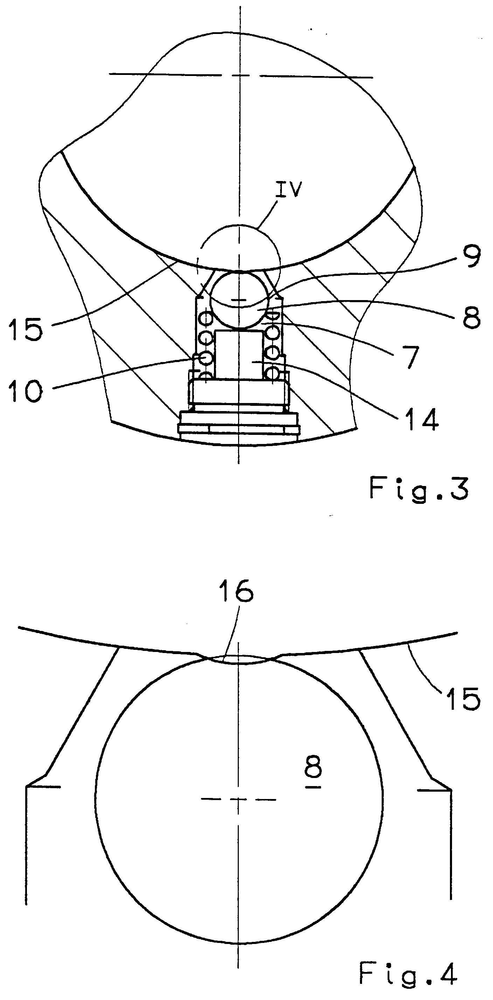

- Fig. 3: der Schnitt III - III aus Fig. 2, und
- Fig. 4: eine vergrößerte Darstellung des Details IV aus Fig. 3.

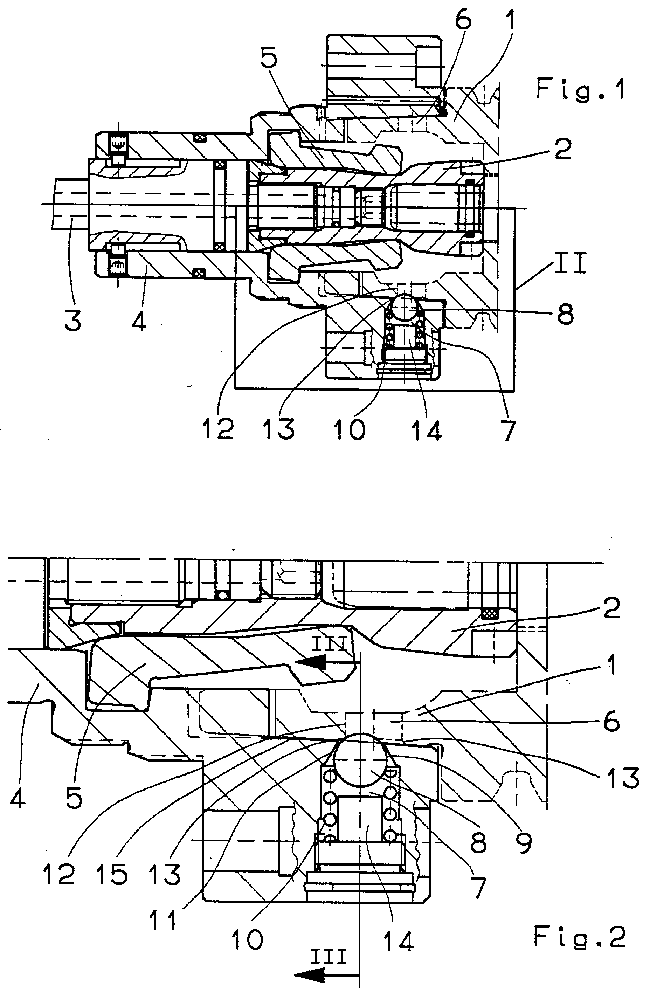

Von einer Spannvorrichtung, die aus der Technik bekannt und beispielsweise in DE 41 38 974 A1 beschrieben ist und daher hier nicht detailliert erläutert zu werden braucht, ist in der Fig. 1 das die Erfindung betreffende, einem Hohlschaftkegel 1 zugewandte axiale Ende gezeigt. Ein Spannkopf 2 ist mit einer Zugstange 3 verbunden, die in axialer Richtung der Arbeitsspindel 4 verstellbar ist, so daß der Spannkopf 2 aus der in Fig. 1 gezeigten Lösestellung in eine Spannstellung überführbar ist, bei denen die Spannklauen 5 in Eingriff mit dem Hohlschaftkegel 1 sind. Gemäß DIN 69893 sind an dem Hohlschaftkegel 1 Bohrungen 6 angeordnet, die hinsichtlich ihrer Größe und Lage festliegen und in radialer Richtung verlaufen. Bei dem in der Zeichnung dargestellten Ausführungsbeispiel ist in der Arbeitsspindel 4 eine in radialer Richtung verlaufende Aufnahme 7 ausgebildet, in der ein als Kugel 9 gebildeter Haltekörper 8 radial verstellbar ist. Die Kugel 9 ist durch eine als Spiralfeder ausgebildete Feder 10 beaufschlagt, die die Kugel 9 in der Aufnahme 7 in Richtung des Hohlschaftkegels 1 verstellt und über den Rand 11 der Aufnahme 7 hinaus preßt. Der Verstellweg der Kugel 9 ist dabei dadurch begrenzt, daß die Aufnahme 7 sich zu ihrem Rand 11 hin verjüngt, so daß die Kugel 9 nicht vollständig aus der Aufnahme 7 austreten kann. Wird der Hohlschaftkegel 1 auf den Spannkopf 2 aufgesteckt, so drückt die Außenumfangsfläche des Hohlschaftkegels 1 die Kugel 9 in die Aufnahme 7 hinein, bis die radiale Bohrung 6 des Hohlschaftkegels 1 über der Aufnahme 7 erscheint und unter der Wirkung der zuvor gespannten Feder 10 die Kugel 9 in die radiale Bohrung 6 zumindest teilweise eintreten kann, wobei die Kugel 9 an dem der Arbeitsspindel 4 zugewandten Rand 12 der radialen Bohrung 6 des Hohlschaftkegels 1 anliegt, an dem eine Anlaufschräge 13 ausgebildet ist, die die in radialer Richtung erfolgende Verstellung der Kugel 9 in eine in axialer Richtung der Arbeitsspindel 4 erfolgende Verstellung des Hohlschaftkegels 1 umsetzt, so daß der Hohlschaftkegel 1 durch die als Haltekörper 8 wirkende Kugel 9 eingezogen und provisorisch vor dem endgültigen Spannen durch die Spannklauen 5 gehalten wird. Der Durchmesser der Kugel 9 ist kleiner als der Durchmesser der radialen Bohrung 6 des Hohlschaftkegels 1, so daß die Kugel 9 nicht am gesamten Umfang der radialen Bohrung 6 des Hohlschaftkegels 1 anliegen kann, was eine in radialer und nicht in axialer Richtung erfolgende Beaufschlagung des Hohlschaftkegels 1 bewirken würde. Der Verstellweg der Kugel 9 ist in die Aufnahme 7 hinein durch einen Anschlag 14 begrenzt.

An dem an der Arbeitsspindel 4 ausgebildeten Aufnahmekegel 15 für den Hohlschaftkegel 1 ist ein sich in axialer Richtung beidseits der Aufnahme 7 erstreckender Freiraum 16 angeordnet, der als flache Mulde von 2 mm Tiefe gestaltet ist. Dieser Freiraum 16 ist symmetrisch zum Mittelpunkt der Kugel 9 und damit zu deren Lauffläche am Hohlschaftkegel 1 plaziert. Treten bei häufigem Wechsel parallel zur Kugellauffläche am Hohlschaftkegel 1 Aufwerfungen infolge des Abrollens der Kugel 9 auf, so können die Aufwerfungen in den Freiraum 16 eintreten, ohne die Spanngenauigkeit zu beeinträchtigen.

Am Hohlschaftkegel 1 sind gleichmäßig über den Umfang verteilte mehrere radiale Bohrungen 6 angeordnet, die mit mehreren in Aufnahmen 7 geführten Haltekörpern 8 zusammenwirken.

## Patentansprüche

1. Spannvorrichtung für einen eine radiale Bohrung (6) aufweisenden Hohlschaft an einem Hohlschaftkegel (1), Werkzeug, Werkstück oder dergl, mit einem an einer Arbeitsspindel (4) angeschlossenen Spannkopf (2), dadurch gekennzeichnet, daß in einer in der Arbeitsspindel (4) ausgebildeten Aufnahme (7) ein verstellbarer Haltekörper (8) angeordnet ist, der unter der Wirkung einer Feder (10) über den Rand (11) der Aufnahme (7) hinaus gegen den der Arbeitsspindel (4) zugewandten Rand (12) der radialen Bohrung (6) des Hohlschafts preßbar ist.

2. Spannvorrichtung nach Anspruch 1, dadurch gekennzeichnet, daß gleichmäßig über den Umfang verteilt die radiale Bohrung (6) und die Aufnahme (7) mit Haltekörper (8) und Feder (10) zu mehreren vorgesehen sind.

3. Spannvorrichtung nach Anspruch 1 oder 2, dadurch gekennzeichnet, daß die Aufnahme (7) radial ausgerichtet und an der radialen Bohrung (6) des Hohlschafts eine Anlaufschräge (13) für den Haltekörper (8) ausgebildet ist

4. Spannvorrichtung nach einem der Ansprüche 1 bis 3, dadurch gekennzeichnet, daß der Haltekörper (8) durch eine Kugel (9) gebildet ist.

5. Spannvorrichtung nach Anspruch 4, dadurch gekennzeichnet, daß der Durchmesser der Kugel (9) kleiner als der Durchmesser der radialen Bohrung (6) des Hohlschafts ist.

6. Spannvorrichtung nach Anspruch 4 oder 5, dadurch gekennzeichnet, daß die Aufnahme (7) sich zu ihrem Rand (11) hin verjüngt.

7. Spannvorrichtung nach einem der Ansprüche 1 bis 6, dadurch gekennzeichnet, daß in der Aufnahme (7) ein den Verstellweg des Haltekörpers (8) begrenzender Anschlag (14) angeordnet ist.

8. Spannvorrichtung nach Anspruch 7, dadurch gekennzeichnet, daß die Feder (10) durch eine auf den Anschlag (14) gesteckte Spiralfeder gebildet ist.

9. Spannvorrichtung nach einem der Ansprüche 1 bis 8, dadurch gekennzeichnet, daß an dem an der Arbeitsspindel (4) ausgebildeten, die Aufnahme (7) aufweisenden Aufnahmekegel (15) ein sich in axialer Richtung erstreckender, symmetrisch zum Haltekörper (8) angeordneter Freiraum (16) vorgesehen ist.

10. Spannvorrichtung nach Anspruch 9, dadurch gekennzeichnet, daß der Freiraum (16) als flache, die Lauffläche des Haltekörpers (8) an dem Hohlschaftkegel (1) einschließende Mulde ausgebildet ist.

11. Spannvorrichtung nach Anspruch 9 oder 10, dadurch gekennzeichnet, daß der Freiraum (16) in axialer Richtung beidseits der Aufnahme (7) ausgebildet ist.
